# EUROPEAN PATENT APPLICATION

(11) **EP 4 155 446 A1**
(43) Date of publication of application: **29.03.2023**
(21) Application number: 21807920.0
(22) Date of filing: 28.04.2021
(51) Int. Cl.: D06C 3/00, B01D 53/00, B01D 46/00, B01D 53/30, B01D 46/44

(54) **TENTER DEVICE**

(30) Priority: 22.05.2020 KR 20200061326
(71) Applicant: KC Cottrell Co., Ltd., Seoul 03909 (KR)
(72) Inventor: KIM, Eun Yeon, Incheon 22186 (KR); LEE, Ki Jung, Seoul 03437 (KR)
(74) Representative: Ter Meer Steinmeister & Partner
(86) International application number: PCT/KR2021/005379
(87) International publication number: WO 2021/235722

(57) **Abstract**

The present invention includes: a combustion unit for burning gas discharged from a tenter unit for drying fiber; a discharge unit for discharging, into the atmosphere, gas discharged from the combustion unit; and a gas collection unit for supplying gas discharged from the combustion unit to the tenter unit. Therefore, the present invention: enables complete removal of air pollutants such as a large amount of dust, odor, and white smoke containing formaldehyde and the like caused by an oil mist; enables continuous circulation of discharged gas to achieve nearly no discharge of pollutants into the atmosphere; and thus prevents air pollution resulting therefrom, and through hot air supply, achieves fire prevention, enhancement of productivity and product quality, and energy saving, thereby solving an environmental problem of domestic and foreign related companies and maximizing company profits.

## Description

### Technical Field

The present invention relates to a tenter apparatus, and more particularly, to a tenter apparatus configured to burn a large amount of air pollutants including formaldehyde and the like, such as dust, an odor, white smoke, which are generated in a tenter operating process and to supply hot air through circulation of high-temperature waste heat generated in the process so as to increase an amount of production, improve qualities, reduce fuel, and prevent fire which has a function more excellent than that of a conventional method and is economical.

### Background Art

Fabric dyed in a dyeing process is soaked in a variety of treating chemicals such as a fabric softener and the like so as not to contract or be stretched and then continuously transferred into a tenter apparatus at a speed of 40 m to 50 m per minute while left and right sides of the fabric are fixed to a tenter tool. Here, the fabric is dried by supplying high-temperature hot air at about 200 °C using a plurality of burners and blowers installed in the tenter tool. Also, a drying area includes several subareas to ten or more subareas for each machine. During this process, as chemicals in which the fabric is soaked evaporate, a large amount of serious air pollutants including formaldehyde and the like, such as dust, an odor, white smoke, and particulate matter are generated.

In the case of a tenter apparatus according to a related art, a scrubber, an electrical dust collector, or the like is applied to treat a gas discharged from a tenter. The scrubber is a device configured to absorb and treat particles in the air by spraying or pulverizing water. Also, the electrical dust collector is a device using a static electricity principle in which a negative charge is applied to a particle in a gas or liquid at a discharge electrode to generate a negative ion and then dust in the gas is charged with the negative ion and moved, due to an electric force, to a dust collecting electrode to which a positive voltage is applied so as to collect dust.

The scrubber and the electrical dust collector have excellent efficiency in other processes but have low pollutant treating efficiency in a tenter process so that it is impossible to completely remove air pollutants such as white smoke and the like caused by oil vapor discharged from the tenter. Also, when a gas discharged from the tenter tool is adequately discharged because it is impossible to supply hot air to the tenter tool, a large amount of heat is lost from the tenter tool and an operating rate of a burner mounted in the apparatus increases as much as the amount lost, and thus fuel expenses increase by 50% or more and manufacturing costs increase. Accordingly, since the apparatus is operated while minimizing gas displacement such that product defects and fire may be caused by oil accumulated on a tenter unit, an exhaust duct, and the like, regular cleaning is necessary and frequent fires occur when regular cleaning is not performed.

### Disclosure

### Technical Problem

Therefore, the present invention is directed to providing a tenter apparatus which can completely treat air pollutants and improve productivity and quality.

### Technical Solution

To solve the above problems, a tenter apparatus according to the present invention may include a combustion unit configured to burn a gas discharged from a tenter unit configured to dry fabric, a discharge unit configured to release a gas discharged from the combustion unit into the air, and a gas recovery unit configured to supply the gas discharged from the combustion unit to the tenter unit.

The discharge unit may include a stack configured to discharge a gas, a discharge pipe configured to connect the stack to the combustion unit, and a damper disposed in the discharge pipe and configured to adjust a flow rate of a gas flowing toward the stack.

The gas recovery unit may include a recovery pipe configured to connect an outlet of the combustion unit to an inlet of the tenter unit to guide a gas from the combustion unit to the tenter unit.

The combustion unit may include a combustion chamber and a main gas supply fan configured to blow a gas discharged from the tenter unit toward the combustion chamber.

The combustion unit may further include a filtering portion connected to the main gas supply fan and the tenter unit.

The combustion chamber may be a heat-storage combustion chamber applied to a regenerative thermal oxidizer (RTO).

The gas recovery unit may further include an auxiliary gas supply fan connected to a recovery pipe.

### Advantageous Effects

According to the present invention, it is possible to completely remove a large amount of dust, an odor, white smoke, and the like which include formaldehyde and the like and accompany a drying process of a tenter after dyeing fabric.

Also, since it is possible to directly supply and provide a high-temperature gas to a tenter unit, a movement speed of the fabric in the tenter may be increased from 40 m/min to be greater than or equal to 50 m/min. Accordingly, a production amount of the fabric is increased. Also, a cost of energy and an amount of fabric softener used in the tenter unit due to work characteristics are reduced by supplying an adequate amount of hot air at a proper temperature.

Also, since oil is not accumulated on the tenter unit and the like, regular cleaning is unnecessary so as to reduce maintenance and repair costs and to prevent fire.

### Description of Drawings

FIG. 1 is a schematic block diagram illustrating components of a tenter apparatus according to one embodiment of the present invention.
FIG. 2 is a schematic diagram illustrating a tenter unit shown in FIG. 1.
FIG. 3 is a view illustrating another embodiment of the tenter apparatus shown in FIG. 1.

### Best Mode

Hereinafter, a tenter apparatus 1 according to one embodiment of the present invention will be described with reference to the drawings.

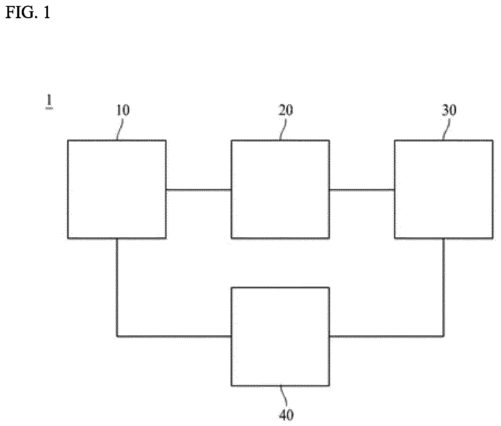

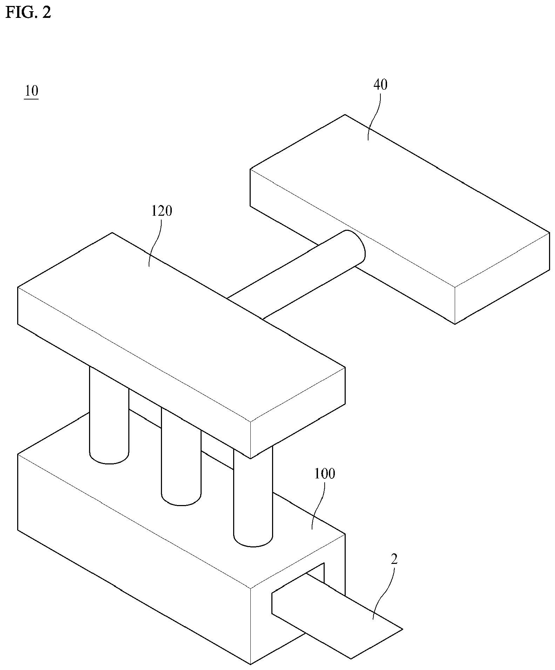

FIG. 1 is a schematic block diagram illustrating components of the tenter apparatus 1 according to one embodiment of the present invention, and FIG. 2 is a schematic diagram illustrating a tenter unit 10 shown in FIG. 1.

Referring to FIG. 1, the tenter apparatus 1 according to one embodiment of the present invention includes a combustion unit 20 connected to the tenter unit 10 to burn polluted air necessarily generated during a fabric drying process and increase productivity by utilizing generated heat for drying fabric, a discharge unit 30, and a gas recovery unit 40.

The tenter unit 10 dries fabric 2 during a fabric dyeing process. Here, the fabric 2 passes through the tenter unit 10 while edges of the fabric 2 are supported to be well spread. While passing through the tenter unit 10, the fabric 2 is exposed to high-temperature air and dried. Accordingly, the tenter unit 10 includes a tenter 100 configured to expose the fabric 2 to high-temperature air and a drying portion 120 configured to supply high-temperature air to the tenter 100. The drying portion 120 dries the fabric with hot air at about 200 °C such as in ironing.

The combustion unit 20 burns a gas discharged from the tenter unit 10. The tenter unit 10 dries the fabric 2, which is treated with chemicals such as fabric softener or the like, with hot air. Here, oil vapor including oil components is generated. The oil vapor is discharged as heavy smoke. The combustion unit 20 burns the gas (oil vapor) flowing therein from the tenter unit 10. The oil vapor is mostly converted into carbon dioxide due to combustion and is partially converted into water. Accordingly, the oil vapor generated due to drying of the fabric 2 in the tenter unit 10 is removed. Also, heavy smoke generated while discharging the oil vapor into the air may be prevented from being discharged. The gas discharged from the combustion unit 20 has a temperature higher than or equal to 210 to 230 °C.

The discharge unit 30 is connected to an outlet of the combustion unit 20. The discharge unit 30 may partially release the gas discharged from the combustion unit 20 into the air. The gas discharged from the combustion unit 20 mostly includes carbon dioxide and partially includes water. Accordingly, even when the discharge unit 30 releases the gas into the air, a problem caused by a hazardous substance does not occur.

The gas recovery unit 40 resupplies the gas discharged from the combustion unit 20 to the tenter unit 10 again. The gas recovery unit 40 mostly supplies the gas discharged from the combustion unit 20 to the tenter unit 10. The gas recovery unit 40 supplies 90% or more of the gas discharged from the combustion unit 20 to the tenter unit 10 again. The remaining 10% or less of the gas may be discharged into the air through the discharge unit 30.

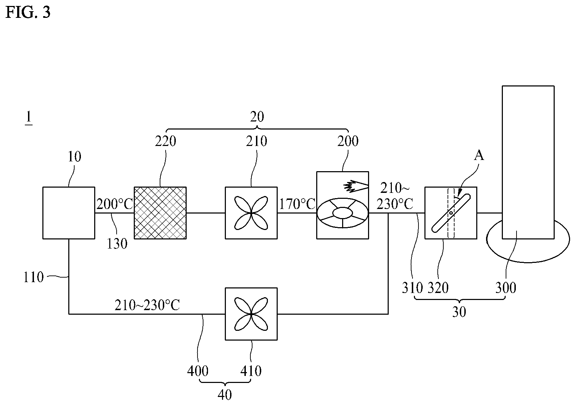

FIG. 3 is a view illustrating another embodiment of the tenter apparatus 1 shown in FIG. 1.

Referring to FIGS. 2 and 3, the tenter unit 10 includes a tenter unit outlet 130 configured to discharge a gas generated due to drying of the fabric 2 and a tenter unit inlet 110 configured to supply a gas through the gas recovery unit 40. A temperature of the gas discharged from the tenter unit outlet 130 is lower than a temperature of a gas flowing into the tenter unit inlet 110. For example, the gas discharged from the tenter unit outlet 130 has a temperature of 200 °C and the gas flowing into the tenter unit inlet 110 has a temperature higher than or equal to 210 to 230 °C.

The combustion unit 20 is a combustion device configured to burn the gas flowing into a combustion chamber 200 using a burner. The combustion unit 20 may include the combustion chamber 200 and a main gas supply fan 210. The main gas supply fan 210 blows the gas discharged from the tenter unit 10 toward the combustion chamber 200. The combustion chamber 200 may remove harmful substances, oil vapor, and the like by burning the gas supplied using the main gas supply fan 210. Also, the combustion unit 20 may further include a filtering portion 220. The filtering portion 220 is connected to the main gas supply fan 210 and the tenter unit 10. The filtering portion 220 removes dust and the like included in the gas discharged from the tenter unit 10. For example, the filtering portion 220 includes a demister. The demister separates and removes droplets or dust particles included in a fluid. Accordingly, durability of the combustion unit 20 may be increased.

As one example, the combustion unit 20 may be a regenerative thermal oxidizer (RTO). Accordingly, the combustion chamber 200 includes a burner configured to burn a gas and ceramic which are heat-storage materials. The heat-storage materials may be disposed to cover an inner surface of the combustion chamber 200. In the case of the heat-storage combustion chamber 200, foreign substances and the like such as dust and the like are accumulated on the heat-storage materials so that heat-storage efficiency and the like are degraded. Accordingly, it is necessary to dispose the filtering portion 220. However, the present invention is not limited thereto. When the combustion chamber 200 is not a heat-storage combustion chamber, it may be unnecessary to dispose the filtering portion 220. The heat-storage combustion chamber may completely remove oil vapor (white smoke) by efficiently consuming energy.

As another embodiment, the combustion unit 20 may include the combustion chamber 200, a heat exchanger (not shown) disposed in the combustion chamber 200, and a gas distribution portion (not shown) disposed at an outlet of the combustion chamber 200. The gas distribution portion may connect the outlet of the combustion chamber 200, the gas recovery unit 40, and the heat exchanger. The gas distribution portion may distribute a gas discharged from the combustion chamber 200 to the heat exchanger and the gas recovery unit 40. The heat exchanger may have a tubular shape wound according to an inner circumferential surface of the combustion chamber 200. The gas flowing into the heat exchanger may heat an internal temperature of the combustion chamber 200 and reduce fuel and energy used in the combustion unit 20. Also, since a heat-storage member is not used, the filtering portion 220 is not disposed.

The discharge unit 30 may include a stack 300, a discharge pipe 310, and a damper 320. The stack 300 diffuses a gas into the air. The discharge pipe 310 connects the stack 300 to the combustion unit 20. The damper 320 is disposed on the discharge pipe 310. The damper 320 adjusts a flow rate of a gas flowing toward the stack 300. The damper 320 may adjust the flow rate of the gas by adjusting an opening rate A thereof. A hot air amount (energy) consumed by the drying portion 120 may be adjusted according to the opening rate A of the damper 320.

As one embodiment, the damper 320 has the opening rate A less than or equal to 10%. Accordingly, lower than or equal to 10% of the gas discharged from the combustion unit 20 may flow toward the stack 300 through the discharge pipe 310. The remaining 90% or more of the gas is provided to the tenter unit 10 by the gas recovery unit 40. The gas recovered by the gas recovery unit 40 may be supplied to the drying portion 120 and supplied to the tenter 100 again. Accordingly, a flow rate of the gas supplied to the tenter 100 is adjustable according to the opening rate A of the damper 320 so that energy consumed for heating a gas in the drying portion 120 is reduced.

The gas recovery unit 40 includes a recovery pipe 400. The recovery pipe 400 connects the outlet of the combustion unit to the tenter unit inlet 110. The recovery pipe 400 guides a gas from the combustion unit 20 to the tenter unit 10. Meanwhile, the damper 320 is disposed between the stack 300 and a connection part between the recovery pipe 400 and the discharge pipe 310. Accordingly, the damper 320 may adjust a flow rate of gas recovered through the recovery pipe 400. Meanwhile, the gas recovery unit 40 may further include an auxiliary gas supply fan 410. The auxiliary gas supply fan 410 may blow the gas discharged from the combustion unit 20 toward the tenter unit inlet 110.

According to one embodiment of the present invention, an odor and white smoke accompanying a process of drying the fabric 2 after dyeing may be removed. Also, since a high-temperature gas may be directly supplied and provided to the tenter unit 10, a movement speed of the fabric 2 in the tenter 100 may be increased from 42 m/min to be greater than or equal to 50 m/min. Accordingly, a production amount of the fabric 2 is increased. Also, an amount of fabric softener used in the tenter unit 10 is reduced. Also, since oil accumulated on the tenter unit 10 and the like is reduced, maintenance and repair costs are reduced and fire caused by oil accumulation may be prevented.

Meanwhile, the drying portion 120 of the tenter unit 10 includes a tenter burner configured to supply hot air to fabric. Also, the tenter apparatus 1 according to one embodiment of the present invention may further include a control portion (not shown). The control portion controls operations of the tenter unit 10, the gas recovery unit 40, the combustion unit 20, and the discharge unit 30.

The control portion may reduce energy consumed by the tenter unit 10 by adjusting an operation of the tenter burner. For example, at an early stage of the operation of the tenter unit 10, the control portion may supply hot air to the fabric by operating the tenter burner. Subsequently, in the tenter unit 10, the fabric is dried by a hot-air gas from a heat source by the tenter burner and a heat source supplied by the gas recovery unit 40. Here, when a temperature of the hot-air gas is higher than or equal to a preset temperature due to the heat source supplied by the tenter burner and the heat source supplied by the gas recovery unit 40, the control portion may reduce energy consumed in the tenter unit 10 by stopping the operation of the tenter burner. Accordingly, the control portion may block discharging the gas through the discharge unit 30 and supply the gas discharged from the combustion unit 20 to the tenter unit 10. However, the control portion may adjust discharging the gas through the discharge unit 30.

Meanwhile, the gas discharged from the tenter unit 10 is circulated through the combustion unit 20 and the gas recovery unit 40 to the tenter unit 10. Accordingly, air pollutants may be prevented from being discharged. Also, the gas discharged from the combustion unit 20 may be directly supplied to the tenter unit 10 through the gas recovery unit 40. That is, an additional heat exchanger for using a heat source of the gas discharged from the combustion unit 20 is unnecessary. Accordingly, a heat recovery rate may be improved by greater than or equal to 90%. That is, the heat recovery rate is very high.

While the exemplary embodiments of the present invention and their advantages have been described in detail with reference to the accompanying drawings, it will be apparent to those skilled in the art to which the present invention belongs that various changes, substitutions, and alterations may be made herein without departing from the scope of the present invention.

## Claims

1. A tenter apparatus comprising:
a combustion unit configured to burn a gas discharged from a tenter unit configured to dry fabric;
a discharge unit configured to release a gas discharged from the combustion unit into the air; and
a gas recovery unit configured to supply the gas discharged from the combustion unit to the tenter unit.

2. The tenter apparatus of claim 1, wherein the discharge unit comprises:
a stack configured to discharge a gas;
a discharge pipe configured to connect the stack to the combustion unit; and
a damper disposed in the discharge pipe and configured to adjust a flow rate of a gas flowing toward the stack.

3. The tenter apparatus of claim 1, wherein the gas recovery unit comprises a recovery pipe configured to connect an outlet of the combustion unit to an inlet of the tenter unit to guide a gas from the combustion unit to the tenter unit.

4. The tenter apparatus of claim 1, wherein the combustion unit comprises:
a combustion chamber; and
a main gas supply fan configured to blow a gas discharged from the tenter unit toward the combustion chamber.

5. The tenter apparatus of claim 4, wherein the combustion unit further comprises a filtering portion connected to the main gas supply fan and the tenter unit.

6. The tenter apparatus of claim 4, wherein the combustion unit burns a gas flowing into the combustion chamber using a burner.

7. The tenter apparatus of claim 6, wherein the combustion unit is a regenerative thermal oxidizer (RTO).

8. The tenter apparatus of claim 1, wherein the tenter unit comprises a tenter burner configured to supply hot air to fabric,
the tenter apparatus further comprising a control portion configured to control operations of the tenter burner, the gas recovery unit, the combustion unit, and the discharge unit, and
wherein when a temperature of a hot-air gas is higher than or equal to a preset temperature due to a heat source supplied by the tenter burner and a heat source supplied by the gas recovery unit, the control portion stops the operation of the tenter burner and reduces energy consumed by the tenter unit.

9. The tenter apparatus of claim 8, wherein the control portion blocks discharging a gas through the discharge unit and supplies the gas discharged from the combustion unit to the tenter unit.

10. The tenter apparatus of claim 1, wherein a gas discharged from the tenter unit is circulated through the combustion unit and the gas recovery unit to the tenter unit again.

11. The tenter apparatus of claim 1, wherein the gas discharged from the combustion unit is directly supplied to the tenter unit through the gas recovery unit.
